# DEMANDE DE BREVET EUROPEEN

(11) **EP 3 476 875 A1**
(43) Date de publication de la demande: **01.05.2019**
(21) Numéro de dépôt: 18202679.9
(22) Date de dépôt: 25.10.2018
(51) Int. Cl.: C08G 18/12, C08G 18/24, C09D 175/06, C08G 18/42

(54) **RESINE TRANSPARENTE POUR RECOUVRIR UN SUBSTRAT, PROCEDE DE FABRICATION D'UNE TELLE RESINE ET ARTICLE OBTENU**

(30) Priorité: 26.10.2017 FR 1760096
(71) Demandeur: Societe Nouvelle Juxta S.A.S., 25400 Audincourt (FR)
(72) Inventeur: MICHAUD, Philippe, 68100 MULHOUSE (FR); SGRO, Julien, 90140 Brebotte (FR)
(74) Mandataire: Koelbel, Caroline

(57) **Abrégé**

La présente invention concerne une résine transparente pour recouvrir ou encapsuler un substrat par une technique de « doming », constituée d'un polyuréthane bi-composant obtenue par réaction d'un premier composant de réaction à base de polyol et d'un catalyseur, et d'un second composant de réaction à base d'isocyanate. Elle est caractérisée en ce que la partie polyol du premier composant de réaction est choisie parmi des polyesters, et plus particulièrement des polycaprolactones, et en ce que le catalyseur est un catalyseur non toxique, exempt de mercure, et de préférence à base de sel d'étain. La partie isocyanate du second composant de réaction est un isocyanate aliphatique majoritairement secondaire et de préférence un polyisocyanate aliphatique majoritairement secondaire. La résine polyuréthane obtenue est sans solvant ajouté, a une viscosité entre 400 et 4000 mPa/s à 25°C et préférentiellement entre 600 et 2500 mPa/s, a la capacité de polymériser à température ambiante, a l'avantage d'être transparente, sans bulle, et de présenter une dureté normalisée élevée comprise entre 40 et 80 shore D (ISO 868).

## Description

### Domaine technique :

La présente invention concerne une résine transparente pour recouvrir ou encapsuler un substrat d'un revêtement superficiel notamment par une technique connue sous la dénomination « Doming », constituée d'une résine polyuréthane bi-composant obtenue par réaction d'un premier composant de réaction à base de polyol et d'un catalyseur, et d'un second composant de réaction à base d'isocyanate, ledit premier composant comportant au moins un polyol ayant au moins 3 fonctions hydroxyles choisi parmi des polyesters, ledit catalyseur étant un catalyseur exempt de mercure, et ladite résine polyuréthane étant obtenue par un mélange dudit premier composant de réaction et dudit second composant de réaction sans solvant ajouté.

L'invention concerne également un procédé de fabrication d'une telle résine, et un article pourvu d'un substrat recouvert en tout ou partie d'une telle résine.

### Technique antérieure :

La technique qui consiste à déposer une résine polyuréthane transparente sur un substrat pour former un revêtement superficiel est communément connue sous la dénomination « Doming ». En séchant à l'air libre ou à température ambiante, la résine prend l'aspect d'un dôme qui produit un effet lenticulaire tridimensionnel. Cette technique de recouvrement donne une brillance et un volume exceptionnel au substrat recouvert. Le relief obtenu par le dôme est généralement d'environ 1 à 2mm et protège le substrat de toutes les agressions atmosphériques, des rayures, de la poussière, des chocs ainsi que de tous les produits chimiques tels que solvants, produits de nettoyage, essence, etc... La technique du « Doming » permet en outre de protéger le substrat contre les rayonnements ultra-violets. Ainsi, l'impression ou la gravure du substrat reste intacte même après une exposition au soleil. Le substrat ainsi recouvert peut ensuite être appliqué sur toutes sortes de surface aussi bien flexible que rigide. Le doming est principalement utilisé dans la signalétique, la publicité, le marquage, etc. Dans ces applications, le substrat est généralement constitué d'un produit en deux dimensions, dans toute matière compatible, telle que cellulosique (papier, carton), plastique, synthétique, composite, métallique, etc. En outre, cette technique de revêtement peut être étendue à de l'encapsulation d'un substrat. Dans ce cas, le substrat peut être constitué d'un produit en trois dimensions, dans toute matière compatible, telle que des pièces en thermoplastique, des composants électroniques, des étiquettes de radio-identification (RFID), des diodes luminescentes (LED), etc. pour tout type d'application dans l'électronique, les objets connectés, le marquage, l'éclairage, etc. Bien entendu, ces exemples de substrats et d'applications ne sont donnés qu'à titre indicatif et ne sont pas limitatifs.

Pour la mise en oeuvre de ces techniques de revêtement ou d'encapsulation, l'utilisation de polyuréthane transparent bi-composant, constitué d'une partie polyol et d'une partie isocyanate, est connue depuis des années comme étant une technologie fiable, accessible et peu coûteuse. Il est également connu que ces résines polyuréthanes contiennent principalement un catalyseur de type mercuriel qui permet la réaction à température ambiante entre les deux parties liquides pour donner le polyuréthane. Grâce à ce catalyseur mercuriel, il est aisé d'obtenir un polyuréthane transparent ayant une dureté normalisée comprise entre 15 Sh D et 85 Sh D, conformément à la norme ISO 868.

Cependant, le mercure est un composé toxique et son interdiction se généralise suite à la Convention de Minamata, traité international visant à protéger la santé humaine et l'environnement contre les effets néfastes du mercure. C'est ainsi que les catalyseurs à base de mercure ne pourront plus être employés dans le polyuréthane. Il convient donc de remplacer au plus vite ces catalyseurs à base de mercure par un autre catalyseur exempt de mercure.

La publication US 4,100,010 décrit la technique de doming connue depuis plus de 40 ans et enseigne qu'il est possible d'utiliser comme catalyseur n'importe quel composé à base de métaux lourds choisi parmi l'étain, le plomb, le zinc, le mercure, le bismuth, le cadmium, l'antimoine, etc. Elle cite entre autres un polyuréthane obtenu avec un catalyseur à base d'étain de type dilaurate de dibutylétain (DBTL) qui a le double avantage d'avoir une toxicité moindre par rapport à celle du mercure, et d'atteindre des duretés normalisées très élevées d'au moins 80 à 85 Sh D (ISO 868).

Néanmoins, des essais ont démontré qu'il n'y a aucune alternative viable en dehors d'un catalyseur à base de mercure. Les autres types de catalyseur, et notamment le catalyseur à base d'étain de type dilaurate de dibutylétain (DBTL) présentent l'inconvénient d'avoir une sélectivité et une rusticité médiocres, ayant pour effet de provoquer la formation systématique de bulles dans la résine, rendant le résultat inacceptable. Le catalyseur à base de mercure présente, quant à lui, un avantage majeur qui le rend indispensable pour des applications de revêtement ou d'encapsulation, et qui consiste dans sa sélectivité. En effet, il favorise la réaction isocyanate-polyol et non la réaction isocyanate-eau, responsable de la formation de bulles dans la résine.

C'est la raison pour laquelle changer tout simplement le catalyseur mercuriel qui sera interdit prochainement par un catalyseur à base d'étain ou d'autres métaux est juste impossible. Cette substitution n'est donc pas suffisante et nécessite de revoir toute la formulation de la résine polyuréthane pour obtenir les duretés souhaitées, ni trop souples, ni trop dures, et ceci sans défaut d'aspect dans la résine tel que le bullage.

La publication EP 1 950 235 A1 décrit une résine bi-composante ayant d'excellentes propriétés optiques et notamment une haute transparence optique, pour des applications optiques et notamment pour fabriquer des diodes électroluminescentes (LED). Elle comporte un premier composant de réaction à base de polyol et plus particulièrement un polycaprolactone triol, et un second composant de réaction à base d'un isocyanate et plus particulièrement un diisocyanate aliphatique. Ces deux composants sont mélangés, puis le mélange est coulé dans des moules, avant de subir une étape de cuisson qui peut monter jusqu'à 165°C pour obtenir des produits durs. Un catalyseur peut être ajouté pour raccourcir le temps de cuisson. En outre, la dureté Shore D des produits obtenus est relativement faible et inférieure à 40 Shore D, voire même inférieure à 20 Shore D. La faible dureté obtenue ainsi que le procédé de fabrication nécessitant obligatoirement une étape de cuisson pour polymériser la résine ne conviennent pas au domaine technique de l'invention du revêtement superficiel d'un substrat par une technique de type « doming ».

La publication US 6,258,918 B1 concerne plus particulièrement le domaine du revêtement superficiel d'un substrat par une technique de type « doming » et décrit la possibilité d'obtenir des résines polyuréthanes transparentes et souples, sans mercure et sans formation de bulle durant la polymérisation de la résine. Dans ce cas, le catalyseur utilisé est à base d'étain tel que le dilaurate de dibutylétain, les polyols sont un mélange de caprolactones avec d'autres polyesters, et les isocyanates choisies ont majoritairement des fonctions primaires. Néanmoins, les formulations décrites ne permettent pas d'obtenir des résines autres que souples. En effet, la dureté normalisée des revêtements obtenus dans les exemples ne dépasse pas les 89 Sh A (ISO 868), ce qui correspond à des résines flexibles et non rigides, et qui est incompatible avec les applications de revêtement et d'encapsulation visées par l'invention. De plus, la polymérisation de la résine est toujours obtenue à une température supérieure à la température ambiante, par exemple à 52°C, et non à température ambiante.

Ainsi, les solutions actuelles ne donnent pas satisfaction pour des applications de revêtement et/ou d'encapsulation d'un substrat par une technique de type doming pour lesquelles on cherche à obtenir des revêtements présentant une dureté normalisée élevée comprise entre 40 et 80 Sh D (ISO 868). Il y a donc un besoin pour une résine à base de polyuréthane bi-composant, permettant une mise en oeuvre par coulée et une réticulation à température ambiante, pour obtenir un revêtement transparent, dur, et sans mercure.

### Exposé de l'invention :

La présente invention vise à pallier ces inconvénients en proposant une résine transparente de polyuréthane bi-composant et un procédé de fabrication de ladite résine de polyuréthane sans mercure, permettant d'une part de répondre aux nouvelles règlementations en matière de santé publique, et d'autre part d'obtenir une résine polymérisée dure, durable et résistante aux rayonnements ultra-violets, sans aucun défaut d'aspect, particulièrement adaptée aux applications dans le domaine du revêtement de surface et/ou de l'encapsulation par une technique de type « Doming ».

Dans ce but, l'invention concerne un procédé de fabrication d'une résine du genre indiqué en préambule, caractérisé en ce que lesdits polyesters sont choisis parmi des polycaprolactones, ayant une masse molaire comprise entre 200 et 6000, et représentant au moins 50% et de préférence au moins 75% en masse dudit premier composant de réaction, en ce que l'on choisit, pour le second composant de réaction, un isocyanate aliphatique majoritairement secondaire et de préférence un polyisocyanate aliphatique majoritairement secondaire, représentant au moins 50% et de préférence au moins 60% en masse dudit second composant de réaction, et en ce que l'on mélange ledit premier composant de réaction et ledit second composant de réaction selon un rapport de fonctions NCO/OH entre 0,75 et 1,25 et préférentiellement 0,9 et 1,1, pour obtenir un mélange ayant une viscosité entre 400 et 4000 mPa/s à 25°C et préférentiellement entre 600 et 2500 mPa/s, de sorte que la résine polyuréthane obtenue après mélange a la capacité de réticuler à température ambiante, est transparente et sans bulle, et présente une dureté normalisée élevée comprise entre 40 et 80 shore D (ISO 868).

Selon les variantes de réalisation de l'invention, on peut ajouter audit premier composant de réaction au moins un diol ayant 2 fonctions hydroxyles, choisi parmi des polycaprolactones, ayant une masse molaire comprise entre 200 et 4000, et représentant au plus 50% et de préférence au plus 25% en masse dudit premier composant de réaction.

On choisit avantageusement un catalyseur conventionnel exempt de mercure, reconnu dans l'état de l'art pour son usage dans les polyuréthanes, comme par exemple un catalyseur à base de métal choisi dans le groupe comprenant l'étain, le plomb, le zinc, le bismuth, le cadmium, de l'antimoine, l'aluminium, le zirconium, pris seul ou en combinaison, cette liste n'étant exhaustive.

Dans un mode préféré de l'invention, on choisit un catalyseur à base de sel d'étain parmi les composés du dibutylétain, et de préférence parmi le groupe comprenant le diacétate de dibutylétain, le dilaurate de dibutylétain. On peut ajouter le catalyseur à base de sel d'étain à hauteur d'au moins 200ppm et d'au plus 5000 ppm, et de préférence d'au moins 300ppm dudit premier composant de réaction.

En fonction des variantes de réalisation de l'invention, on peut ajouter dans ledit premier composant de réaction au moins un additif choisi parmi un absorbeur de rayonnements ultra-violets à hauteur de 0,1 à 4% en masse, un stabilisateur de lumière à hauteur de 0,1 à 2% en masse. On peut également ajouter dans ledit premier composant de réaction au moins un additif complémentaire choisi parmi un absorbeur d'humidité à hauteur de 0,1 à 3% en masse, un anti-mousse dans une quantité inférieure à 0,2% en masse, un antioxydant à hauteur de 0,1 à 2% en masse.

Selon les variantes de réalisation, on peut ajouter dans ledit second composant de réaction au moins un autre isocyanate aliphatique primaire ou secondaire, représentant au plus 30% en masse du second composant de réaction et préférentiellement au plus 15% en masse.

Pour obtenir ledit second composant de réaction, on fait réagir avantageusement la partie isocyanate avec au moins un polyol ayant au moins 3 fonctions hydroxyles, choisi parmi des polyesters ou des polyéthers, ayant une masse molaire comprise entre 200 et 6000, et représentant au plus 40% et de préférence au plus 25% en masse dudit second composant de réaction, et optionnellement avec au moins un diol ayant 2 fonctions hydroxyles, choisi parmi des polyesters ou des polyéthers, ayant une masse molaire comprise entre 200 et 4000, et représentant au plus 50% et de préférence au plus 25% en masse dudit premier composant de réaction, pour obtenir un prépolymère.

Le but de l'invention est également atteint par une résine transparente obtenue selon le procédé de fabrication décrit ci-dessus, et par un article comportant un substrat recouvert de ladite résine transparente permettant de former un revêtement polyuréthane réticulé à température ambiante, sans mercure, sans bulle, et ayant une dureté normalisée élevée comprise entre 40 et 80 shore D (ISO 868).

### Description de l'invention et de ses variantes :

Il a été découvert de manière surprenante et inattendue la possibilité de préparer des revêtements transparents et durs (duretés normalisées entre 40 et 80 Sh D) à partir d'une résine de polyuréthane bi-composant, sans catalyseur mercuriel, par réticulation à température ambiante d'un polyisocyanate aliphatique majoritairement secondaire avec un polyol polyester de structure caprolactone, en présence d'un catalyseur exempt de mercure, à base d'autres métaux et préférentiellement à base de sel d'étain.

Le terme « transparent » employé dans la description permet de qualifier une caractéristique optique indispensable de la résine pour des applications de revêtement et/ou d'encapsulation. Il est connu de l'homme du métier que la transparence d'une résine, à savoir sa capacité à laisser passer les rayons lumineux, est fonction de la bonne miscibilité des deux composants de réaction, qui elle-même est fonction du choix des deux composants de réaction et de la température à laquelle s'effectue la réaction des deux composants. En l'occurrence, le choix d'un isocyanate aliphatique en tant que second composant est un bon composant pour obtenir une résine transparente.

Le paramètre de « dureté » employé dans la description permet de quantifier une caractéristique mécanique de la résine obtenue après réticulation. Ce paramètre est contrôlé à l'aide d'un duromètre Shore qui mesure la dureté, notamment des élastomères, et selon la norme ISO 868.

L'invention permet donc la réalisation de revêtements superficiels transparents et durs par coulée d'une résine, durcissant sans utilisation d'un dérivé mercuriel. La technique permettant de déposer une dose de résine sur un substrat, appelée communément doming, correspond notamment à celle décrite dans la publication US 4 100 010. Bien entendu toute autre technique de dépose manuelle, semi-automatique ou automatique d'une résine sur un substrat peut convenir.

La résine de polyuréthane selon l'invention est réticulée grâce à des fonctions isocyanates et est obtenue grâce aux mélanges de deux produits de réaction, à savoir un premier composant de réaction et un second composant de réaction, tels que décrits ci-après.

Le mélange des deux produits de réaction est de préférence réalisé sans solvant ajouté. Pour être plus précis, « sans solvant ajouté » signifie que le mélange contient une quantité d'eau et de solvant organique à des niveaux qui n'ont aucune influence sur la viscosité du mélange. La quantité d'eau et/ou de solvant organique présente, due à la réaction des deux produits de réaction et à l'intégration de certains additifs solvantés, comme par exemple les anti-mousses, doit pouvoir s'évaporer suffisamment pendant la polymérisation de la résine pour éviter la formation de défauts, tels que des bulles, des trainées ou similaires, dans le revêtement en polyuréthane obtenu. Avantageusement, il doit y avoir moins de 5% de solvant en masse dans le mélange, et de manière préférentielle moins de 1% de solvant en masse dans ledit mélange.

Le premier composant de réaction selon l'invention contient une partie polyol pouvant comporter un ou plusieurs polyols, et optionnellement un ou plusieurs diols, et un catalyseur.

Les polyols utilisés sont des composants ayant 3 fonctions hydroxyles ou plus. Les polyols sont des polyesters de structure caprolactone et plus particulièrement des polycaprolactones, tels que ceux commercialisés sous la marque CAPA™, sans que cet exemple ne soit limitatif. Le ou les polyols ont une masse molaire combinée comprise entre 200 et 6000. Préférentiellement, la partie polyol compose au moins 50% en masse du premier composant de réaction et préférentiellement au moins 75% en masse.

Optionnellement, un ou plusieurs diols sont inclus dans le premier composant de réaction. Les diols sont des composés ayant deux fonctions hydroxyles. Les diols sont également des polyesters de structure caprolactone et plus spécifiquement des polycaprolactones, tels que ceux commercialisés sous la marque CAPA™, sans que cet exemple ne soit limitatif. Le ou les diols ont une masse molaire combinée comprise entre 200 et 4000. De plus, la partie diol représente au plus 50% en masse du premier composant de réaction et préférentiellement au plus 25% en masse.

Ainsi, dans la forme préférée de l'invention, la partie polyol du premier composant de réaction est composée uniquement de polycaprolactones.

Le premier composant de réaction nécessite un catalyseur. Les fonctions isocyanates du second composant de réaction réagissent avec les groupes hydroxyles du premier composant de réaction sous l'influence du catalyseur pour former des liaisons uréthanes. On choisira un catalyseur conventionnel exempt de mercure, reconnu dans l'état de l'art pour son usage dans les polyuréthanes, comme par exemple un catalyseur à base de métal choisi dans le groupe comportant l'étain, le plomb, le zinc, le bismuth, le cadmium, l'antimoine, l'aluminium, le zirconium, pris seul ou en combinaison, cette liste n'étant pas exhaustive. On préférera un catalyseur à base d'étain, notamment les composés du dibutylétain, et de manière préférentielle le diacétate de dibutylétain ou le dilaurate de dibutylétain. Le catalyseur est inclus à hauteur d'au moins 200 ppm et d'au plus 5000 ppm du premier composant de réaction et plus préférentiellement à plus de 300 ppm.

Optionnellement, le premier composant de réaction peut inclure divers additifs. Par exemple, des absorbeurs UV (Ultra-Violet) peuvent être utilisés pour améliorer la résistance aux expositions extérieures de la résine polyuréthane. Les absorbeurs UV généralement reconnus dans l'état de l'art sont convenables pour l'invention, tels qu'à titre d'exemple ceux commercialisés sous la marque Tinuvin® 312, sans que cet exemple ne soit limitatif. La quantité d'absorbeur UV dans le premier composant de réaction est préférentiellement comprise entre 0,1 et 4% en masse.

Il est également possible d'ajouter un stabilisateur de lumière appelé HALS (Hindered Amine Light Stabilizer) à la place ou en combinaison avec l'absorbeur UV. Il contribue à la photo stabilisation du polyuréthane en piégeant les radicaux alkoxy et hydroxy qui sont produits par la dissociation des hydroperoxydes. Les stabilisateurs HALS généralement reconnus dans l'état de l'art sont convenables pour l'invention, tels qu'à titre d'exemple ceux commercialisés sous la marque Chisorb® 292, sans que cet exemple ne soit limitatif. La quantité de stabilisateur HALS souhaitée se situe de préférence entre 0,1 et 2% en masse.

De plus, d'autres additifs peuvent éventuellement être intégrés dans le premier composant de réaction comme les absorbeurs d'humidité, les anti-mousses et les antioxydants. Les produits conventionnels de ces catégories de produits reconnus dans l'état de l'art peuvent convenir dans l'invention pour améliorer les propriétés finales du polyuréthane. Les absorbeurs d'humidité sont préférentiellement inclus entre 0,1 et 3% en masse, les antioxydants entre 0,1 et 2% en masse et les anti-mousses représentent une quantité généralement inférieure à 0,2% en masse.

Le second composant de réaction est obtenu en faisant réagir un polyisocyanate aliphatique avec un ou plusieurs polyols, et optionnellement un ou plusieurs diols, pour former un prépolymère. Le but d'un prépolymère est de contrôler la viscosité du second composant de réaction et la réactivité finale avec le premier composant de réaction. Le second composant de réaction selon l'invention comprend un isocyanate aliphatique, et de préférence un polyisocyanate aliphatique majoritairement secondaire. Un isocyanate secondaire est défini comme ayant un atome de carbone auquel est liée une fonction isocyanate (NCO), un atome d'hydrogène et deux atomes de carbone. Le polyisocyanate aliphatique majoritairement secondaire représente au moins 50% en masse et de préférence au moins 60% en masse du second composant de réaction. Le polyisocyanate aliphatique majoritairement secondaire peut être le seul composé isocyanate ou combiné avec d'autres isocyanates aliphatiques primaires ou secondaires, tels que par exemple l'isophorone diisocyanate (IPDI) et le méthylène bis(4-cyclohexylisocyanate) (H12MDI), représentant au plus 30% en masse du second composant de réaction et préférentiellement au plus 15% en masse.

Le ou les polyols utilisés en réaction avec l'isocyanate pour former le second composant de réaction sont des composants ayant 3 fonctions hydroxyles ou plus. Les polyols peuvent être tout type de polyesters et/ou de polyéthers. Le ou les polyols ont une masse molaire combinée comprise entre 200 et 6000. Préférentiellement, la partie polyol compose au plus 40% en masse du second composant de réaction et préférentiellement au plus 25% en masse.

Optionnellement, le ou les diols utilisés en réaction avec l'isocyanate pour former le second composant de réaction sont des composés ayant deux fonctions hydroxyles. Les diols peuvent être tout type de polyesters et/ou de polyéthers. Le ou les diols ont une masse molaire combinée comprise entre 200 et 4000. De plus, la partie diol représente au plus 40% en masse du second composant de réaction et préférentiellement au plus 25% en masse.

Le premier et le second composants de réaction sont combinés pour former un mélange sans solvant ajouté, ayant un ratio de fonctions NCO/OH (nombre de fonctions isocyanates/nombre de fonctions polyols) entre 0,75 et 1,25 et préférentiellement entre 0,9 et 1,1. Ce ratio de fonctions préféré correspond à un mélange obtenu à parts égales de chacun des composants de réaction moyennant une tolérance de + ou - 10%. Le mélange obtenu sans solvant ajouté, peut ensuite être appliqué ou coulé sur tout substrat choisi, et par exemple des étiquettes, porte-clés, autocollants, plaques signalétiques, aimants, logos, étiquettes RFID, ruban de diodes électroluminescentes, etc.

Avant le mélange, les deux composants de réaction sont maintenus à des viscosités spécifiques. La viscosité est mesurée sur un viscosimètre Brookfield RVT, conformément à la norme ISO 2555, permettant de déterminer la viscosité apparente des résines à l'état liquide selon le Procédé Brookfield, avec le mobile 2 à une vitesse de 10 tours par minute. La viscosité du premier composant de réaction est maintenue dans un intervalle de 200 à 4000 mPa/s à 23°C et préférentiellement entre 500 et 2500 mPa/s à 23°C. La viscosité du second composant de réaction est maintenue dans un intervalle de 100 à 4000 mPa/s à 23°C et préférentiellement entre 100 et 2500 mPa/s.

Après le mélange, le mélange obtenu a une viscosité entre 400 et 4000 mPa/s à 25°C et préférentiellement entre 600 et 2500 mPa/s.

La viscosité du mélange obtenu est importante dans la réalisation du revêtement superficiel ou de l'encapsulation superficielle par une technique de type doming. La viscosité du polyuréthane doit être suffisante pour permettre la formation d'un dôme sur le substrat. Une viscosité trop élevée augmentera le risque d'un mauvais étalement sur le substrat. Au contraire, une viscosité trop fluide augmentera le risque de débordement de la matière sur le substrat. Le polyuréthane de la présente invention est capable de former un dôme d'une épaisseur qui peut être comprise entre 0,5 et 2,5 mm, de préférence entre 1 et 2 mm, notamment supérieure à 1 mm et préférentiellement supérieure à 1,5 mm.

Selon la présente invention, le mélange est déposé sur le substrat et polymérise pour former un revêtement superficiel ou une encapsulation superficielle en résine de polyuréthane transparente et dure. La réticulation du polymère est obtenue de préférence par une polymérisation à la température ambiante, ayant l'avantage de préserver l'intégrité du substrat. Les autres méthodes conventionnelles reconnues dans l'état de l'art peuvent également convenir à l'invention notamment pour accélérer la polymérisation.

De préférence, la polymérisation se fait à température ambiante pendant 24h pour être hors « tack ». Le « tack » est le terme consacré pour décrire le toucher final du polyuréthane après au moins une nuit de polymérisation (soit environ 16h). Si la résine est collante au toucher, on dit que le polyuréthane « tack ».

Le polymère formé a une dureté variable qui est due majoritairement au choix initial de l'isocyanate. Il est durable et résiste aux rayonnements ultra-violets. La dureté du polyuréthane est déterminée avec un duromètre en Shore D comme expliqué précédemment. Le polyuréthane obtenu peut avoir une dureté normalisée élevée allant de 40 Sh D à 80 Sh D selon la norme ISO 868.

### Formules de base

Il n'existe pas une, mais plusieurs formules de base, en fonction de la dureté finale voulue pour le polyuréthane. La dureté varie majoritairement en fonction du choix de l'isocyanate présent dans le second composant de réaction.

Cependant, les principes de formulation restent les mêmes quelle que soit la dureté finale. Comme décrit précédemment, il faut un premier composant de réaction à base de polyol et un second composant de réaction à base d'isocyanate pour former la résine polyuréthane selon l'invention sans solvant ajouté et sans mercure. C'est en mélangeant une quantité définie de chaque composant de réaction que l'on obtient une résine polyuréthane, cette quantité définie est généralement de 50/50 à + ou - 10%, sans que cet exemple ne soit limitatif.

Nous prendrons à titre d'exemple une formulation permettant d'atteindre une dureté normalisée de 40 Sh D (ISO 868).

### Formulation du premier composant de réaction à base de polyol :

- 91,1 g de polycaprolactone triol de masse molaire 540 et à 6,5g de polycaprolactone diol de masse molaire 400 sont ajoutés dans le réacteur à 85°C.
- 0,7g de Chisorb 1010 (pentaerythritol tetrakis(3-(3,5-di-tert-butyl-4-hydroxyphenyl)propionate)) et 0,8g de Chisorb 1033 (2-ethyl-2'-ethoxy-oxalanilide) sont également ajoutés dans le réacteur à 85°C.
- Le mélange est agité pendant 4h sous vide.
- Le chauffage est ensuite descendu à 45°C.
- Ensuite, 0,1 g de dilaurate de dibutylétain, 0,8g de Chisorb 292 (0,64 g de bis(1,2,2,6,6-pentamethyl-4-piperidyl sebacate) et 0,16 g de methyl 1,2,2,6,6-pentamethyl-4-piperidyl sebacate) sont ajoutés dans le réacteur à 45°C.
- L'agitation du mélange continue pendant environ 30 min avant un nouveau dégazage d'au moins 30 min sans agitation.
- Puis le produit est filtré et conditionné.

### Formulation du second composant de réaction à base d'isocyanate :

- 65,99 g de l'isophorone diisocyanate sont ajoutés dans le réacteur et sont portés à 80°C.
- Ensuite, 17 g de polypropylène glycol diol de masse molaire 3800, 17g de polypropylène glycol triol de masse molaire 3400 et à 0.01 g de dilaurate de dibutylétain sont ajoutés dans le réacteur. Le mélange obtenu doit rester minimum 1h30 à 80°C.
- La température est descendue à 55°C environ.
- Le mélange est dégazé pendant une 1/2h minimum puis le produit est conditionné.

### Tableaux comparatifs

Les tableaux 1 et 2 ci-dessous présentent en tout huit exemples de formulation dont les exemples 1 et 2 issus de l'art antérieur et les exemples 3 à 8 issus de l'invention, les huit formulations comportant un catalyseur à base de sel d'étain (DABCO T-12N) en lieu et place du catalyseur mercuriel traditionnel.

Ces tableaux permettent d'illustrer d'une part l'impact positif du type de polyol, à savoir les polycaprolactones, utilisé dans le premier composant de réaction sur l'aspect final de la résine de polyuréthane (bulle, tack) et d'autre part, le fait que de remplacer simplement un catalyseur mercuriel par un catalyseur à base de sel d'étain ne garantit pas l'obtention d'un polyuréthane correct dans les exemples 1 et 2 de l'art antérieur.

L'exemple 1 montre en outre que l'utilisation d'un premier composant de réaction à base de polyols polyéthers ne permet pas d'avoir une résine sans bulle. De même, l'exemple 2 permet de dire qu'un premier composant de réaction majoritairement composé d'un polyol polyéther aminé n'aboutit pas non plus à la formation d'une résine polyuréthane sans bulle. Ces deux exemples démontrent que, malgré la présence d'un polyisocyanate majoritairement secondaire, les polyols polyéthers (aminé ou non) ne conviennent pas pour les applications de l'invention.

Les exemples 3 à 8 permettent la formation d'un polyuréthane transparent sans bulle. Ils démontrent de manière surprenante que l'utilisation de polycaprolactones, associés à un polyisocyanate majoritairement secondaire permet d'obtenir une résine polyuréthane sans bulle et sans tack, utilisable aussi bien pour du revêtement que pour de l'encapsulation de substrat par une technique de type doming.

**Tableau 1 : Exemple de formulations de résine pour du revêtement classique de substrat**

| | Exemple 1 | Exemple 2 | Exemple 3 | Exemple 4 | Exemple 5 | Exemple 6 |
|---|---|---|---|---|---|---|
| **1^{er} composant de réaction (grammes) à base de polyol** | | | | | | |
| Voranol P400 | 58,45 | 16,5 | - | - | - | - |
| Voranol CP450 | 41 | - | - | - | - | - |
| Voranol RA800 | - | 33,5 | - | - | - | - |
| CAPA3050 | - | - | 91,1 | 91,1 | 91,1 | 91,1 |
| CAPA2043 | - | - | 6,5 | 6,5 | 6,5 | 6,5 |
| Tinuvin 312 | 0,8 | 0,8 | 0,8 | 0,8 | 0,8 | 0,8 |
| Irganox 1010 | 0,7 | 0,7 | 0,7 | 0,7 | 0,7 | 0,7 |
| Chisorb 292 | 0,8 | 0,8 | 0,8 | 0,8 | 0,8 | 0,8 |
| DABCO T-12 N | 0,55 | 0,05 | 0,1 | 0,1 | 0,1 | 0,1 |

| **2^{ème} composant de réaction (grammes) à base d'isocyanate** | | | | | | |
|---|---|---|---|---|---|---|
| Vestanat IPDI | 67,99 | 67,99 | 67,99 | 75,7 | 59,4 | 65,6 |
| Desmodur W | - | - | - | - | 10 | - |
| Voranal CP3355 | 16 | 16 | 16 | - | 15,3 | - |
| Voranol P2000 | 16 | 16 | 16 | - | - | - |
| Voranol P400 | - | - | - | 24,3 | - | - |
| Voranol CP4755 | - | - | - | - | - | 17,2 |
| Voranol EP1900 | - | - | - | - | 15,3 | 17,2 |
| Isocyanate(s) utilisé(s) | Majoritairement secondaire | Majoritairement secondaire | Majoritairement secondaire | Majoritairement secondaire | Majoritairement secondaire | Majoritairement secondaire |

| **Résultats** | | | | | | |
|---|---|---|---|---|---|---|
| Clarté | Transparent | Transparent | Transparent | Transparent | Transparent | Transparent |
| Bullage à 23°C | Oui | Oui | Non | Non | Non | Non |
| Tack | Oui | Oui | Non | Non | Non | Non |
| Dureté normalisée | 40 Sh D | 74 Sh D | 40 Sh D | 70 Sh D | 50 Sh D | 55 Sh D |

**Tableau 2 : Exemple de formulations de résine pour de l'encapsulation de substrat de type étiquette RFID**

| | Exemple 7 | Exemple 8 |
|---|---|---|
| **1^{er} composant de réaction (grammes) à base de polyol** | | |
| CAPA3031 | 28 | - |
| CAPA3050 | 63,1 | 91,12 |
| CAPA2043 | 6,5 | 6,5 |
| Tinuvin 312 | 0,8 | 0,8 |
| Irganox 1010 | 0,7 | 0,7 |
| Chisorb 292 | 0,8 | 0,8 |
| DABCO T-12 N | 0,1 | 0,08 |

| **2^{ème} composant de réaction (grammes) à base d'isocyanate** | | |
|---|---|---|
| Vestanat IPDI | 90,5 | 32,8 |
| Desmodur W | - | 38,8 |
| Voranol CP260 | 9,5 | - |
| Voranol CP3355 | - | 5,6 |
| Voranol P2000 | - | 5,6 |
| Voranol EP1900 | - | 8,6 |
| Voranol CP4755 | - | 8,6 |
| Isocyanate(s) utilisé(s) | Majoritairement secondaire | Majoritairement secondaire |

| **Résultats** | | |
|---|---|---|
| Clarté | Transparent | Transparent |
| Bullage à 23°C | Non | Non |
| Tack | Non | Non |
| Dureté normalisée | 77 Sh D | 55 Sh D |

### Matières utilisées

| **Désignation** | **Description** |
|---|---|
| Voranol CP250 | Polyéther triol de masse molaire 255 |
| Voranol P400 | Polyéther diol de masse molaire 400 |
| Voranol CP450 | Polyéther triol de masse molaire 450 |
| Voranol CP3355 | Polyéther triol de masse molaire 3400 |
| Voranol CP4755 | Polyéther triol de masse molaire 4800 |
| Voranol P2000 | Polyéther diol de masse molaire 2000 |
| Voranol EP1900 | Polyéther diol de masse molaire 3800 |
| Voranal RA800 | Polyéther aminé quadrol de masse molaire 280 |
| CAPA3031 | Polycaprolactone triol de masse molaire 300 |
| CAPA3050 | Polycaprolactone triol de masse molaire 540 |
| CAPA2043 | Polycaprolactone diol de masse molaire 400 |
| Vestanat IPDI | Isophorone diisocyanate |
| Desmodur W | 4,4'-Methylene dicyclohexyl diisocyanate |
| Tinuvin 312 | Anti-UV |
| Irganox 1010 | Anti-oxydant |
| Chisorb 292 | Stabilisateur HALS |
| DABCO T-12 N | Dilaurate de dibutylétain |

La présente invention n'est pas limitée aux exemples de réalisation décrits mais s'étend à toute modification et variante évidentes pour un homme du métier.

## Revendications

1. Procédé de fabrication d'une résine transparente pour recouvrir ou encapsuler un substrat d'un revêtement superficiel notamment par une technique connue sous la dénomination « Doming », la résine étant une résine polyuréthane bi-composant que l'on obtient par réaction d'un premier composant de réaction à base de polyol et d'un catalyseur, et d'un second composant de réaction à base d'isocyanate, dans lequel l'on choisit, pour le premier composant, au moins un polyol ayant au moins 3 fonctions hydroxyles choisi parmi des polyesters, et un catalyseur exempt de mercure, et dans lequel l'on mélange ledit premier composant de réaction et ledit second composant de réaction sans solvant ajouté, **caractérisé en ce que** lesdits polyesters sont choisis parmi des polycaprolactones, ayant une masse molaire comprise entre 200 et 6000, et représentant au moins 50% et de préférence au moins 75% en masse dudit premier composant de réaction, **en ce que** l'on choisit, pour le second composant de réaction, un isocyanate aliphatique majoritairement secondaire et de préférence un polyisocyanate aliphatique majoritairement secondaire, représentant au moins 50% et de préférence au moins 60% en masse dudit second composant de réaction, et **en ce que** l'on mélange ledit premier composant de réaction et ledit second composant de réaction selon un rapport de fonctions NCO/OH entre 0,75 et 1,25 et préférentiellement 0,9 et 1,1, pour obtenir un mélange ayant une viscosité entre 400 et 4000 mPa/s à 25°C et préférentiellement entre 600 et 2500 mPa/s, de sorte que la résine polyuréthane obtenue après mélange a la capacité de réticuler à température ambiante, est transparente et sans bulle, et présente une dureté normalisée élevée comprise entre 40 et 80 shore D (ISO 868).

2. Procédé selon la revendication 1, **caractérisé en ce que** l'on ajoute audit premier composant de réaction au moins un diol ayant 2 fonctions hydroxyles, choisi parmi des polycaprolactones, ayant une masse molaire comprise entre 200 et 4000, et représentant au plus 50% et de préférence au plus 25% en masse dudit premier composant de réaction.

3. Procédé selon la revendication 1, **caractérisé en ce que** l'on choisit un catalyseur conventionnel exempt de mercure, à base de métal choisi dans le groupe comprenant l'étain, le plomb, le zinc, le bismuth, le cadmium, de l'antimoine, l'aluminium, le zirconium, pris seul ou en combinaison.

4. Procédé selon la revendication 3, **caractérisé en ce que** l'on choisit un catalyseur à base de sel d'étain parmi les composés du dibutylétain, et de préférence parmi le groupe comprenant le diacétate de dibutylétain, le dilaurate de dibutylétain, et **en ce que** l'on ajoute ledit catalyseur à base de sel d'étain à hauteur d'au moins 200 ppm et d'au plus 5000 ppm, et de préférence d'au moins 300 ppm dudit premier composant de réaction.

5. Procédé selon la revendication 1, **caractérisé en ce que** l'on ajoute dans ledit premier composant de réaction au moins un additif choisi parmi un absorbeur de rayonnements ultra-violets à hauteur de 0,1 à 4% en masse, un stabilisateur de lumière à hauteur de 0,1 à 2% en masse, et optionnellement au moins un additif complémentaire choisi parmi un absorbeur d'humidité à hauteur de 0,1 à 3% en masse, un anti-mousse dans une quantité inférieure à 0,2% en masse, un antioxydant à hauteur de 0,1 à 2% en masse.

6. Procédé selon la revendication 1, **caractérisé en ce que** l'on ajoute dans ledit second composant de réaction au moins un autre isocyanate aliphatique primaire ou secondaire, représentant au plus 30% en masse du second composant de réaction et préférentiellement au plus 15% en masse.

7. Procédé selon la revendication 1, **caractérisé en ce que**, pour obtenir ledit second composant de réaction, on fait réagir la partie isocyanate avec au moins un polyol ayant au moins 3 fonctions hydroxyles, choisi parmi des polyesters ou des polyéthers, ayant une masse molaire comprise entre 200 et 6000, et représentant au plus 40% et de préférence au plus 25% en masse dudit second composant de réaction, et optionnellement avec au moins un diol ayant 2 fonctions hydroxyles, choisi parmi des polyesters ou des polyéthers, ayant une masse molaire comprise entre 200 et 4000, et représentant au plus 50% et de préférence au plus 25% en masse dudit premier composant de réaction, pour obtenir un prépolymère.

8. Résine transparente pour recouvrir ou encapsuler un substrat d'un revêtement superficiel notamment par une technique connue sous la dénomination « Doming », constituée d'une résine polyuréthane bi-composant obtenue par réaction d'un premier composant de réaction à base de polyol et d'un catalyseur, et d'un second composant de réaction à base d'isocyanate selon le procédé de fabrication de l'une quelconque des revendications précédentes, la partie polyol dudit premier composant de réaction comportant au moins un polyol ayant au moins 3 fonctions hydroxyles choisi parmi des polyesters, ledit catalyseur étant un catalyseur exempt de mercure, et la résine polyuréthane étant obtenue par un mélange dudit premier composant de réaction et dudit second composant de réaction sans solvant ajouté, **caractérisé en ce que** lesdits polyesters sont choisis parmi des polycaprolactones, ayant une masse molaire comprise entre 200 et 6000, et représentant au moins 50% et de préférence au moins 75% en masse dudit premier composant de réaction, **en ce que** la partie isocyanate du second composant de réaction comporte au moins un isocyanate aliphatique majoritairement secondaire et de préférence un polyisocyanate aliphatique majoritairement secondaire, représentant au moins 50% et de préférence au moins 60% en masse dudit second composant de réaction, **en ce que** la résine polyuréthane est obtenue par un mélange dudit premier composant de réaction et dudit second composant de réaction selon un rapport de fonctions NCO/OH entre 0,75 et 1,25 et préférentiellement 0,9 et 1,1, pour obtenir un mélange ayant une viscosité entre 400 et 4000 mPa/s à 25°C et préférentiellement entre 600 et 2500 mPa/s, et **en ce qu'**après réticulation à température ambiante, ladite résine polyuréthane est transparente et sans bulle, et présente une dureté normalisée élevée comprise entre 40 et 80 shore D (ISO 868).

9. Résine selon la revendication 8, **caractérisée en ce que** ledit premier composant de réaction comporte en outre au moins un diol ayant 2 fonctions hydroxyles, choisi parmi des polycaprolactones, ayant une masse molaire comprise entre 200 et 4000, et représentant au plus 50% et de préférence au plus 25% en masse dudit premier composant de réaction.

10. Résine selon la revendication 8, **caractérisée en ce que** ledit catalyseur conventionnel exempt de mercure est un catalyseur à base de métal choisi dans le groupe comprenant l'étain, le plomb, le zinc, le bismuth, le cadmium, de l'antimoine, l'aluminium, le zirconium, pris seul ou en combinaison.

11. Résine selon la revendication 10, **caractérisée en ce que** ledit catalyseur est un catalyseur à base de sel d'étain choisi parmi les composés du dibutylétain, et de préférence parmi le groupe comprenant le diacétate de dibutylétain, le dilaurate de dibutylétain et **en ce que** ledit catalyseur à base de sel d'étain représente au moins 200 ppm et au plus 5000 ppm, et de préférence au moins 300ppm dudit premier composant de réaction.

12. Résine selon la revendication 8, **caractérisée en ce que** ledit premier composant de réaction comporte au moins un additif choisi parmi un absorbeur de rayonnements ultra-violets à hauteur de 0,1 à 4% en masse, un stabilisateur de lumière à hauteur de 0,1 à 2% en masse, et optionnellement au moins un additif complémentaire choisi parmi un absorbeur d'humidité à hauteur de 0,1 à 3% en masse, un anti-mousse dans une quantité inférieure à 0,2% en masse, un antioxydant à hauteur de 0,1 à 2% en masse.

13. Résine selon la revendication 8, **caractérisée en ce que** la partie isocyanate du second composant de réaction comporte au moins un autre isocyanate aliphatique primaire ou secondaire représentant au plus 30% en masse et préférentiellement au plus 15% en masse du second composant de réaction.

14. Résine selon la revendication 8, **caractérisée en ce que** la partie isocyanate du second composant de réaction réagit avec au moins un polyol ayant au moins 3 fonctions hydroxyles, choisi parmi des polyesters ou les polyéthers, ayant une masse molaire comprise entre 200 et 6000, et représentant au plus 40% et de préférence au plus 25% en masse dudit second composant de réaction, et optionnellement avec au moins un diol ayant 2 fonctions hydroxyles, choisi parmi des polyesters ou des polyéthers, ayant une masse molaire comprise entre 200 et 4000, et représentant au plus 50% et de préférence au plus 25% en masse dudit premier composant de réaction, pour obtenir un prépolymère.

15. Article comportant un substrat recouvert en tout ou partie d'un revêtement superficiel notamment par une technique connue sous la dénomination « Doming » et d'une résine transparente en présence d'un catalyseur non mercuriel selon l'une quelconque des revendications 8 à 14, **caractérisé en ce que** ladite résine transparente forme un revêtement polyuréthane réticulé à température ambiante, sans bulle, ayant une dureté normalisée élevée comprise entre 40 et 80 shore D (ISO 868), et agencé pour former sur ledit substrat un dôme d'une épaisseur comprise entre 0,5 et 2,5 mm et de préférence entre 1 et 2 mm.
